(19) Europäisches Patentamt
European Patent Office
Office européen des brevets

(11) Publication number: **0 196 169 B1**

# (12) EUROPEAN PATENT SPECIFICATION

(45) Date of publication of patent specification: **17.03.93**

(51) Int. Cl.5: **C08G 77/38**

(21) Application number: **86301505.3**

(22) Date of filing: **04.03.86**

## (54) Carboxylhydrocarbyl-substituted silicon compounds.

(30) Priority: **25.03.85 US 715320**

(43) Date of publication of application:
**01.10.86 Bulletin 86/40**

(45) Publication of the grant of the patent:
**17.03.93 Bulletin 93/11**

(84) Designated Contracting States:
**DE FR GB**

(56) References cited:
**EP-A- 0 186 507**
**DE-A- 3 303 113**
**FR-A- 2 235 946**
**US-A- 3 629 309**

**PATENT ABSTRACTS OF JAPAN, vol. 2, no. 15 (C-77), 31st January 1978, page 3921 C 77; & JP-A-52 114 699 (AJINOMOTO K.K.) 26-09-1977**

**RAPRA ABSTRACTS, vol. 7, no. 5, May 1971, abstract no. 3532; M.V. SOBOLEVSKII et al.: "Incorporation of a carboxyalkyl group into polysiloxanes", & PLAST. MASSY, no. 9, 1970, pages 21-22**

(73) Proprietor: **DOW CORNING CORPORATION**

**Midland Michigan 48640(US)**

(72) Inventor: **Keil, Joseph Woodward**
**5805 Flaxmoor**
**Midland Michigan(US)**
Inventor: **Ross, Marcus Edmund**
**2216 Ashman**
**Midland Michigan(US)**

(74) Representative: **Lewin, John Harvey et al**
**Elkington and Fife Prospect House 8 Pembroke Road**
**Sevenoaks, Kent TN13 1XR (GB)**

**EP 0 196 169 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates generally to the preparation of carboxylhydrocarbyl-substituted silicon compounds and particularly to the preparation of carboxylalkyl-substituted silanes and siloxanes, some of which have unusual substantivity for a metal substrate.

The methods disclosed in the art for the preparation of carboxylhydrocarbyl-substituted silicon compounds typically comprise a hydrolysis reaction of a cyanohydrocarbyl-substituted or carbalkoxyhydrocarbyl-substituted silicon compound. However, these hydrolysis methods are not completely satisfactory inasmuch as the hydrolysis reaction is rarely complete and the resulting carboxyhydrocarbyl-substituted silicon compound contains trace amounts of residual cyanohydrocarbyl, amidohydrocarbyl or carbalkoxyhydrocarbyl radicals.

G. Chandra and D. R. Juen in EP-A- 0 149 341 disclose certain silalactones and a method for making carboxylalkyl-substituted organopolysiloxanes therefrom. The carboxylalkyl-substituted organopolysiloxanes are prepared by hydrolysis of silalactone compositions having the general formula

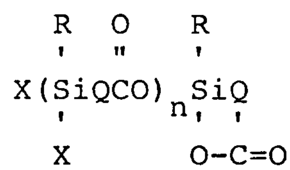

where n has an average value greater than zero, R and Q are hydrocarbon radicals and X is Cl or Br. Silicon-containing compounds having the formula $R_aZ_bSiO_{(4-a-b)/2}$ where Z is a hydrolyzable radical can be co-hydrolyzed with the silalactone, if desired. While the method of Chandra and Juen provides carboxylalkyl-substituted siloxanes which are substantially free of residual lactone radicals, their method does not provide for carboxylalkyl-endblocked siloxanes or for carboxylalkyl-substituted silanes. In addition, Chandra and Juen do not disclose the preparation of carboxylalkyl-substituted silanes and siloxanes that have substantivity for a metal substrate.

FR-A-2 235 946 discloses silicon-containing lactones which are obtained by reacting a silylcarboxyl-substituted alpha olefin with a hydrosilylating agent, followed by hydrolysis. The hydrosilylating agent, in addition to the SiH group, contains a group which simultaneously with the hydrolysis of the silylcarboxyl group gives a lactone linkage.

There is a continuing need in the silicone industry for new, less complex, more reliable methods for making carboxylhydrocarbyl-substituted silicon compounds. There is, in particular, a need for a new method for preparing silanes and siloxanes which contain carboxyl(higher)alkyl radicals, such as carboxyldecyl radicals, in view of the fact that the prior art methods are primarily directed to the preparation of carboxyl-(lower)alkyl-substituted siloxanes, such as carboxylethyl- or carboxylpropyl-substituted siloxanes.

It is an object of the present invention to provide a method for preparing carboxylhydrocarbyl-substituted silanes and siloxanes. It is a particular object of this invention to provide a method for preparing carboxylalkyl-substituted polydiorganosiloxane having surprising substantivity for a metal substrate.

These objects, and others that will occur to the reader when considering the following disclosure and appended claims, are obtained by the method of this invention which, comprises

(A) reacting a carboxyl-substituted alpha olefin with a silylating agent to silylate substantially all carboxyl radicals therein, thereby providing a silylcarboxyl-substituted alpha olefin, the carboxyl-substituted alpha olefin having the formula $CH_2=CR''Q_mCOOH$ wherein R'' denotes -H or $-CH_3$, Q denotes a divalent hydrocarbon radical free of aliphatic unsaturation and m has a value of 0 or 1, and the silylating agent having the formula $R'_3SiZ$ wherein R' denotes a monovalent hydrocarbon radical free of aliphatic unsaturation and Z denotes a radical selected from -Cl, $-NHSiR'_3$,
$-N(SiR'_3)COCH_3$, $-N(CH_3)COCH_3$ and

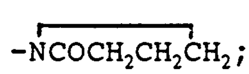

(B) reacting the silylcarboxyl-substituted alpha olefin with a hydrosilylating agent, thereby providing a silylcarboxylhydrocarbyl-substituted silicon compound, the hydrosilylating agent being selected from silanes and siloxanes having the average unit formula $R_aH_bSiO_{(4-a-b)/2}$ wherein R denotes an R' radical or an R' radical substituted with a radical selected from alkoxy, polyoxyalkylene and epoxy, a has a value of

from 1 to 3 and b has a value of from 0.001 to 1; and

(C) reacting the silylcarboxylhydrocarbyl-substituted silicon compound with a hydroylzing agent to hydrolyse substantially all of the silylcarboxyl radicals therein and to provide the carboxylhydrocarbyl-substituted silicon compound.

In a preferred embodiment of this invention, the hydrosilylating agent is a preformed organopolysiloxane which directly provides carboxylhydrocarbyl-substituted siloxane compounds.

The method of this invention is useful for the preparation of various silicon compounds, such as silanes, silcarbanes and siloxanes, which bear an average of at least one silicon-bonded, carboxyl-substituted hydrocarbyl radical, hereinafter delineated, per molecule. Any other silicon-bonded radicals therein are nonhydrolyzable, aliphatically saturated radicals and are selected from divalent radicals, such as oxygen atoms and organic radicals, linking silicon atoms and monovalent radicals, such as hydroxyl radicals and organic radicals, such as hydrocarbon radicals and substituted hydrocarbon radicals.

The carboxylhydrocarbyl-substituted silicon compounds that are prepared by the method of this invention. thus contain at least one silicon atom having the configuration $X_wSiA_{4-w}$ wherein A denotes the carboxylhydrocarbyl radical, X denotes the above-noted monovalent and divalent radicals and w has a value of from 0 to 3, preferably 2 or 3 and typically 3.

Carboxylhydrocarbyl-substituted silanes provided by the method of this invention have the formula $X_wSiA_{4-w}$ wherein X, when present, is limited to monovalent hydrocarbon radicals, such as methyl, phenyl and dodecyl, and monovalent substituted hydrocarbon radicals

Carboxylhydrocarbyl-substituted siloxanes and silcarbanes produced by said method consist of a plurality of silicon atoms linked by the above-noted divalent radicals and bearing at least one silicon-bonded A radical, all other silicon-bonded radicals therein being the above-noted monovalent radicals.

In the method of this invention a carboxyl-substituted alpha olefin, i.e., a terminally unsaturated carboxylic acid, is first capped with a silylating agent.

The terms "terminally unsaturated carboxylic acid" and "carboxyl-substituted alpha olefin" are regarded and used herein as being synonomous and denote any compound bearing one or more carbon-bonded -COOH radicals and one or more $CH_2=CR''$- radicals wherein R" denotes a methyl radical or a hydrogen atom. The -COOH radicals can be bonded directly or indirectly, by way of multivalent organic radicals, to the $CH_2=CR''$- radicals, as desired.

The broad class of carboxyl-substituted alpha olefins, delineated above, has numerous members and is well-known in the organic chemistry art and needs no further general discussion. Some members thereof are commercially available.

In a preferred embodiment of the present invention, the carboxyl-substituted alpha olefin is a monocarboxylic, alpha monoolefin, hereinafter olefin acid, having the formula

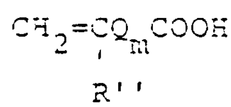 .

R" denotes a hydrogen atom or a methyl radical, m is either 0 or 1 and Q, when present, denotes a divalent hydrocarbon radical free of aliphatic unsaturation such as an aromatic radical, such as phenylene, tolylene and naphthylene, an aliphatic radical, such as methylene, ethylene and branched or linear propylene, butylene, octylene, decylene, dodecylene and hexadecylene and combinations of aromatic and aliphatic radicals, such as benzylene. Preferably, Q has from 1 to 20 carbon atoms.

Examples of olefin acids that are suitable for use in the method of this invention include, but are not limited

to, $CH_2=CHCOOH$,

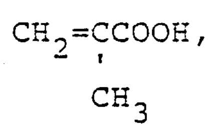

$CH_2=CHC_6H_4COOH$,

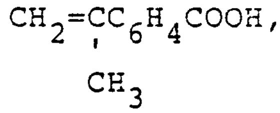

$CH_2=CHCH_2C_6H_4COOH$ and, preferably, olefin acids having the formula $CH_2=CH(C_nH_{2n})COOH$ wherein n has a value of from 1 to 20, such as $CH_2=CH(CH_2)_nCOOH$, such as $CH_2=CHCH_2COOH$, $CH_2=CH(CH_2)_4COOH$, $CH_2=CH(CH_2)_{12}COOH$ and those olefin acids used in the examples, hereinafter disclosed.

A highly preferred olefin acid to be used in the method of this invention is undecylenic acid because it is readily available and provides silicon compounds which have unexpected substantivity on a metal substrate.

In the method of this invention, a silylating agent is used to cap the carboxyl radical(s) of the carbonyl-substituted alpha olefin.

The silylating agent is selected from compounds having the formula $R'_3SiZ$. R' denotes a monovalent hydrocarbon radical free of aliphatic unsaturation, such as alkyl, such as methyl, ethyl, propyl; aryl such as phenyl; cycloaliphatic, such as cyclohexyl and arylalkyl, such as benzyl. Preferably, each R' has from 1 to 6 carbon atoms in the silylating agent. Z denotes a hydrolyzable radical and is selected from the group consisting of -Cl, $-NHSiR'_3$,

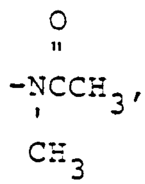, 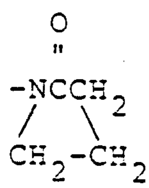 and 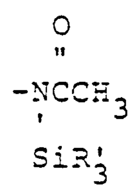

wherein R' has the meaning noted above.

The silylating agent can consist of a single compound having the formula $R'_3SiZ$, such as $R'_3SiNHSiR'_3$, or a mixture of two or more compounds having the formula $R'_3SiZ$, for example including $R'_3SiCl$. The R' radicals in the formula $R'_3SiZ$ can be the same or different, as desired; however, at least one R' radical is preferably methyl.

Examples of silylating agents that are suitable for use in the method of this invention include, but are not limited to, $Me_3SiCl$, $Me_3SiNHSiMe_3$,

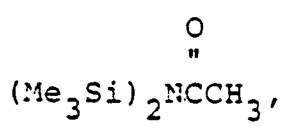

$Me_3SiN(CH_3)COCH_3$ and

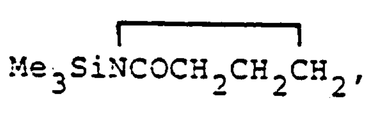

wherein Me denotes the methyl radical.

A highly preferred silylating agent to be used in the method of this invention is hexamethyldisilazane, i.e., $Me_3SiNHSiMe_3$, because it is easily handled, it is efficient and its silylation by-product, $NH_3$, is easily removed from the silylation reaction mixture.

Silylating agents are well known in the organic and organosilicon chemistry art and need no further delineation herein. Trimethylsilylation agents are commercially available. Such silylating agents are described, for example, by Plueddemann in the chapter on silylating agents in "Encyclopedia of Chemical Technology", 3rd edition, volume 20, page 962 et seq.

In the method of this invention, the silylcarboxyl-substituted alpha olefin is hydrosilylated with a hydrosilylating agent. The hydrosilylating agent can be any compound within the above general formula containing one or more silicon atoms, at least one of which bears a hydrogen atom directly bonded thereto that will participate in a hydrosilylation reaction with a terminal olefin having the structure $CH_2 = CR''$-, noted above. Within the limits noted above the hydrosilylating agent can have the structure of a silane or a siloxane, or a combination thereof and can have any form such as a fluid form, such as a gas or liquid, or a nonfluid form such as a solid, a resin, a gel or a gum.

In a preferred embodiment of this invention, the hydrosilylating agent is selected from the group of liquid silanes and liquid siloxanes having the average unit formula $R_aH_bSiO_{(4-a-b)/2}$ wherein each R denotes a monovalent hydrocarbon radical free of aliphatic unsaturation, as noted for R' above, except now having from 1 to 20 carbon atoms, or a substituted monovalent hydrocarbon radical free of aliphatic unsaturation having from 1 to 20 carbon atoms. The substituents of said substituted radicals are selected from the group consisting of alkoxy radicals, such as methoxy and ethoxy, polyoxyalkylene radicals, such as polyoxyethylene and polyoxypropylene and epoxy radicals, such as

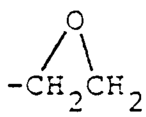 and 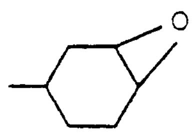 .

In the silicon-containing formula immediately above, $a$ has a value of from 1 to 3, such as 1.0, 1.5, 1.9, 2.0, 2.1 and 3.0 and $b$ has a value of from 0.001 to 1 such as 0.001, 0.01, 0.02, 0.1, 0.5 and 1.0. When the sum of the values of $a$ and $b$ is equal to 4, the hydrosilylating agent is a silane having the formula $R_3SiH$, such as $Me_3SiH$, $PhMe_2SiH$, wherein Ph denotes the phenyl radical, $CF_3CH_2CH_2(Me)_2SiH$ and $CH_3(OCH_2CH_2)_7CH_2CH_2CH_2(Me)_2SiH$. When the sum of the values of $a$ and $b$ is less than 4, the hydrosilylation agent is a siloxane, such as a disiloxane, a linear trisiloxane, a cyclotrisiloxane, a linear or branched tetrasiloxane, a cyclotetrasiloxane, a higher linear, branched or cyclic polysiloxane or a silsesquixoane. Said siloxane hydrosilylating agent consists of two or more siloxane units appropriately selected from $R_3SiO_{1/2}$, $R_2HSiO_{1/2}$, $RH_2SiO_{1/2}$,$H_3SiO_{1/2}$, $R_2SiO_{2/2}$, $RHSiO_{2/2}$, $H_2SiO_{2/2}$, $RSiO_{3/2}$, $HSiO_{3/2}$ and $SiO_{4/2}$ siloxane units to satisfy the average formula $R_aH_bSiO_{(4-a-b)/2}$.

The hydrosilylating agent is preferably a linear siloxane fluid having the formula

$R''Me_2SiO(MeR'SiO)_x(MeHSiO)_ySiMe_2R''$

wherein R' and R'' have the meanings denoted above and $x$ and $y$ each have values of from 0 to 1000, independently. Of course, if $y$ is zero then at least one R'' in the immediately above-formula must be hydrogen.

A particularly useful hydrosilylating agent is a disiloxane having the formula $HMe_2SiOSiMe_2H$, because it provides a fully hydrosilylated product which is useful as an endblocking agent in a siloxane polymerization reaction to provide carboxylhydrocarbyl terminating radicals for the polysiloxane.

A particularly economical hydrosilylating agent is a trimethyl-endblocked polysiloxane having the formula $Me_3SiO(Me_2SiO)_x(MeHSiO)_zSiMe_3$ wherein $x$ has a value of from 0 to 1000 and $z$ has a value of from 1 to 50.

Hydrosilylating agents are well-known materials and can be readily prepared from commercially available materials. For example, silane hydrosilylating agents, if not commercially available, can be prepared by alkylating and/or reducing a suitably substituted chlorosilane such as $Me_2SiCl_2$, $Me_3SiCl$, $PhMeSiCl_2$, $MeSiCl_3$ or $SiCl_4$. Siloxane hydrosilylating agents can be prepared by the hydrolysic and condensation of suitably substituted chlorosilanes, such as $Me_3SiCl$, $Me_2SiCl_2$, $MeHSiCl_2$, $HMe_2SiCl$, $MeSiCl_3$, $HSiCl_3$ and $SiCl_4$. Additionally, they can be prepared by equilibrating an organohydrogenpolysiloxane, such as $(MeHSiO)_4$ and/or $Me_3SiO(MeHSiO)_{35}SiMe_3$ and/or $(HMe_2Si)_2O$ with other organopolysiloxanes, such as $(Me_2SiO)_4$ and/or $Me_3Sio(Me_2SiO)_{100}SiMe_3$, preferably with an acidic catalyst.

Additional examples of siloxane hydrosilylating agents that are suitable for use in the method of this invention include, but are not limited to, $HMe_2SiO(Me_2SiO)_{100}(MeHSiO)_5SiMe_2H$, $(MeHSiO)_4$, $Me_3SiO(MeHSiO)_{35}SiMe_3$, $Me_3SiO(MeHSiO)_1SiMe_3$, $Me_3SiO(Me_2SiO)_{90}$-$(MeHSiO)_{10}SiMe_3$, $HMe_2SiO(Me_2SiO)_{15}SiMe_2H$, $Me_3SiO$

$$(Me\underset{|}{Si}O)_{15}(MeHSiO)_3SiMe_3,$$
$$CH_2CH_2CF_3$$

$Me_3SiO(Me_2SiO)_3(MeHSiO)_5SiMe_3$,

$$Me_3SiO(Me\underset{|}{Si}O)_{25}(MeHSiO)_{10}SiMe_3,$$
$$C_{12}H_{25}$$

$(HMe_2SiO)_4Si$, $(HMe_2SiO)_3SiMe$, $(HMe_2SiO)_3SiH$,

$$Me_3SiO(Me_2SiO)_{200}(Me\underset{|}{Si}O)_2(MeHSiO)_8SiMe_3$$
$$CH_2CH_2CH_2(OCH_2CH_2)_7OCH_3$$

and $Me_3SiO(Me_2SiO)_{90}(Ph_2SiO)_5(MeHSiO)_2SiMe_3$.

Many other suitable silane and siloxane hydrosilylating agents are disclosed in the organosilicon art.

In the method or this invention, the silylated, hydrosilylated carboxyl-substituted alpha olefin is hydrolyzed with a hydrolyzing agent. While the hydrolyzing agent can be any composition that can convert a triorganosilylated carboxyl radical to a carboxyl radical in a substantially quantitative manner without undesirably reacting with both the starting silylcarboxylhydrocarbyl-substituted silicon compound and the produced carboxylhydrocarbyl-substituted silicon compound, it is preferable a composition comprising free water and is typically merely water. The hydrolysis reaction proceeds spontaneously at room temperature when water is added to the intermediate silylcarboxylhydrocarbyl-substituted silicon compound. It will be clear to those of ordinary skill in the silicone technology that water can be added by a variety of means in order to restore the carboxyfunctionality of the capped carboxyl radicals. For example, the silicon compound could be applied to a wet surface so that the capped radicals are uncapped, i.e., converted to carboxyl radicals, in place on the surface.

Silylation of the carboxyl-substituted alpha olefin in Step (A) of this method is done under suitable reaction conditions and with a sufficient amount of silylating agent so that substantially all -COOH radicals therein are converted to -COOSi≡ radicals, wherein the undesignated silicon valences are satisfied by organic radicals that are unreactive with silicon-bonded hydrogen atoms. Said organic radicals are R' radicals and preferably methyl radicals, as hereinabove delineated.

As is well known, this amount or silylating agent to be used depends upon the structure and reactivity of the silylating agent. That is, silylating agents containing one silyl unit per molecule such as $R'_3SiCl$, $R'_3SiN(CH_3)COCH_3$ require more agent, per -COOH radical, than silylating agents which have two silyl units per molecule, such as $R'_3SiNHSiR'_3$ and $(R'_3Si)_2NCOCH_3$, there preferably being a slight stoichiometric excess of $R'_3Si$ units over -COOH radicals in any case. Although not being required, any unreacted silylating agent and silylation by-products are preferably removed from the silylation reaction mixture before proceeding to Step (B) of the method.

In a preferred embodiment of this method, one mol of an olefin acid having the formula $CH_2=CR''Q_mCOOH$, for example, undecylenic acid, is reacted with at least 0.5 mol of $Me_3SiNHSiMe_3$ to produce one mol of $CH_2=CR''Q_mCOOSiMe_3$, i.e., a silylcarboxyl-substituted alpha olefin, for example, trimethylsilyl undecylenate, and one mol of $NH_3$.

Hydrosilylation of the silylcarboxyl-substituted alpha olefin in Step (B) of this method is done under suitable conditions and with a sufficient amount of hydrosilylating agent so that an average of at least one silicon-bonded hydrogen atom per molecule of the hydrosilylation agent is converted to a silylcarboxylhydrocarbyl radical. By a silylcarboxylhydrocarbyl radical, it is meant herein an organic radical which contains a $-CH_2CHR''-$ portion which is bonded to a silicon atom and which contains one or more -COOH radicals, all of which have been silylated to -COOSi≡ radicals, noted above.

Although not being required by this method, it is preferred that substantially all of the silylcarboxyl-substituted alpha olefin be hydrosilylated in this step. This result requires that the number ratio of silicon-bonded hydrogen atoms to $CH_2=CR''$- radicals have a value of at least 1.

In one embodiment of the method of this invention, the amounts of hydrosilylating agent and silylcarboxyl-substituted alpha olefin are such that the number ratio of silicon-bonded hydrogen atom to $CH_2=CR''$- radicals is substantially stoichiometric, i.e., one available SiH for each available $CH_2=CR''$-. Available SiH sites and $CH_2=CR''$-sites can be measured by well-known analytical techniques.

For another embodiment of the method of this invention, the amounts of hydrosilylating agent and silylcarboxyl-substituted alpha olefin are such that the number of silicon-bonded hydrogen atoms is present in a stoichiometric excess relative to $CH_2=CR''$- radicals. In this embodiment it is preferred, but not required, that the silicon-bonded hydrogen atoms that are not used to hydrosilylate silylcarboxyl-substituted alpha olefin molecules, are used to hydrosilylate an olefinic compound selected from the group of compounds having the formula $CH_2=CR'_2{}'$ and $CH_2=CR''R$ to provide silicon-bonded-$CH_2CHR'_2{}'$ or -$CH_2CHRR''$ radicals, wherein R and R'' have the meanings noted above.

Examples of said olefinic compound include, but are not limited to, $CH_2=CH_2$, $CH_2=CHCH_3$, $CH_2=CHPh$,

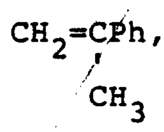

$CH_2=CHCF_3$,

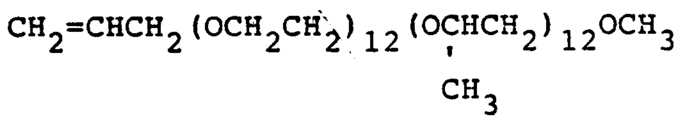

and $CH_2=CH(CH_2)_8H$.

It is to be noted that the present invention includes the method wherein all of the available SiH sites of a hydrosilylating agent are reacted with one or more silylcarboxyl-substituted alpha olefins; the method wherein less than all, but at least 1, of said available SiH sites are reacted with one or more silylcarboxyl-substituted alpha olefins and the unreacted SiH sites are not further reacted; and the method wherein at least 1 of said available SiH sites is reacted with one or more silylcarboxyl-substituted alpha olefins and other SiH sites are reacted with said olefinic compound, either partially or completely. It is to be further noted that the hydrosilylating agent in each case noted immediately above can comprise silicon-bonded R radicals having the formulae -$CH_2CHR'_2{}'$ or -$CH_2CHRR''$, whether or not additional numbers of said radicals are subsequently added.

Hydrosilylation is a well-known reaction in the organosilicon art and needs no extensive delineation herein. The reaction is typically catalyzed by, for example, a peroxide-generating compound, such as di-t-butyl peroxide, or a precious metal compound such as a platinum-containing compound. In the method of this invention, the hydrosilylation reaction is preferably catalyzed with a soluble metal catalyst, such as a chloroplatinic acid-containing composition.

In a preferred embodiment of the method of this invention, a silylcarboxyl-substituted alpha olefin having the formula $CH_2=CR''Q_mCOOSiMe_3$ is reacted, under the influence of a chloroplatinic acid-vinylsiloxane complex, with a methylhydrogenpolysiloxane to produce a polysiloxane bearing at least one $SiCH_2CHR''Q_mCOOSiMe_3$ group, i.e., a silylcarboxylhydrocarbyl-substituted polysiloxane.

Hydrolysis of the silylcarboxylhydrocarbyl-substituted silicon compound in Step (C) of this method is done under suitable conditions and with sufficient amount of hydrolyzing agent so that substantially all of the silylcarboxyl radicals therein are converted to carboxyl radicals, thereby providing a carboxylhydrocarbyl-substituted silicon compound intended by this method. As is well known, at least one molecule of water is theoretically required for every two silylcarboxyl radicals, according to the following equation, to provide carboxyl radicals.

$$2\ \text{-}COOSiR'_3 + H_2O \rightarrow 2\ \text{-}COOH + R'_3SiOSiR'_3$$

However, in the method of this invention, it is preferred to use at least one, and preferably more than one, molecule of water for each silylcarboxyl radical, according to the following equation, to provide carboxyl radicals.

$-COOSiR'_3 + H_2O \rightarrow -COOH + R'_3SiOH$

Although not required by this invention, it is preferred that nonessential materials be separated from the desired product of this reaction, i.e., a carboxylhydrocarbyl-substituted silicon compound. Nonessential materials include, but are not limited to, reaction solvents, such as isopropyl alcohol and hexane; excess olefinic compound, such as dodecene; excess hydrolyzing agent such as water; and byproducts, such as regenerated carboxyl-substituted alpha olefin, such as acrylic acid or undecylenic acid; and hydrolysis byproducts, such as $R'_3SiOH$ and $R'_3SiOSiR'_3$.

Said separating process can usually be accomplished by distilling, preferably under vacuum, volatile materials from less volatile materials. However, other well-known techniques, such as solvent extraction, recrystallization and filtration, and combinations thereof can also be used, if desired.

Because of the substantially quantitative nature of the silylation-desilylation (hydrolysis) process used in the method of this invention, there is provided thereby carboxylhydrocarbyl-substitutedsilicon compounds that are free of residual radicals.

The carboxylhydrocarbyl-substituted silicon compounds that are provided by the method of this invention have all the utilities disclosed in the art for said compounds. For example, carboxylhydrocarbyl-substituted siloxane fluids can be used in cosmetic formulations, polish formulations, coating formulations, shampoo formulations and as intermediates for the preparation of other siloxanes.

In one embodiment of this invention, a carboxylhydrocarbyl-substituted disiloxane obtained from sym-tetramethyldisiloxane has been equilibrated with cyclopolydimethylsiloxanes to prepare a carboxylhydrocarbyl-terminated polydimethylsiloxane fluid. It will be obvious to those skilled in the art that any carboxylhydrocarbyl-substituted siloxane of this invention can be used in a siloxane copolymerization reaction with any other hydrolyzable silane or polymerizable siloxane to produce carboxylhydrocarbyl-substituted siloxanes having any structure such as linear, cyclic, branched siloxanes, and combinations thereof.

The method of this invention has particular utility for producing siloxanes containing carboxyldecyl radicals, and none of the residual radicals noted in the prior art discussion above, said siloxanes having unexpected substantivity to a metal surface, as noted in the following examples.

The following examples are disclosed to further illustrate but not limit the present invention which is properly delineated by the appended claims.

Viscosities were measured at 25°C and the values, in centipoise, were converted to pascal-seconds for this disclosure by multiplying the centipoise value by 0.001.

Acid number, denoted herein as A.N., was determined for a siloxane by titrating a known amount of the siloxane to a bromcresol purple endpoint, using alcoholic KOH, and is equal to the number of mg of KOH so used divided by the amount of siloxane titrated.

Example 1

This example demonstrates the utility of the present invention for preparing a nongelling, carboxyldecyl-substituted siloxane fluid that is useful as an additive in a shampoo formulation.

A 500 ml, 3-neck flask was fitted with a stirrer, thermometer, condenser and heating mantle. To the flask was added 92 g of undecylenic acid, 50 g of hexamethyldisilazane and 1 drop of trifluoroacetic acid. The mixture was heated to 100°C for one hour and then stripped under vacuum and heated (1.3 kPa (10 Torr) at 115°C) to remove excess hexamethyldisilazane and $NH_3$. The resulting trimethylsilylated undecylenic acid was a clear, yellowish liquid and had a slight $NH_3$ smell. It had the nominal formula $CH_2=CH(CH_2)_8-CO_2Si(CH_3)_3$.

In another 500 ml, 3-neck flask, fitted as noted above, was placed 15.42 g of the above-described trimethylsilylated undecylenic acid and 110.44 g of siloxane having the average formula

$Me_3SiO(Me_2SiO)_{67}(MeHSiO)_3SiMe_3$.

The contents of the flask were heated to 85°C, the heating mantle was removed and 6 drops of a 0.1 N solution of $H_2PtCl_6 \cdot 6H_2O$ in isopropyl alcohol were added to the flask. The reaction mixture exothermed to 110°C, after which heating was continued for 45 minutes to maintain a reaction temperature of 100°C. The reaction product was then cooled to 70°C and 5 g of water were added thereto to hydrolyze the trimethylsilylated carboxyl radical and regenerate the carboxyl radical, now attached to the siloxane polymer by a decylene linkage. After being stirred for 1 hour, the hydrolyzed product was devolatilized at 120°C

and 1.3 kPa (10 Torr) to provide a hazy fluid having a viscosity of 420 mPa•s and the nominal formula

$$Me_3SiO(Me_2SiO)_{67}(\underset{\displaystyle C_{10}H_{20}COOH}{\underset{|}{MeSiO}})_3SiMe_3$$

Thirty-five g of this fluid were emulsified in 54.5 g of water to provide a jelly-like emulsion having an average particle size of less than 0.5 micrometer. Two g of this emulsion were mixed with 98 g of a shampoo formulation having a pH of 5 to provide a clear shampoo formulation.

When the preparation of the above-described fluid was repeated with 11.04 g of undecylenic acid, dissolved in 25 g of isopropyl alcohol saturated with sodium acetate, instead of the 15.42 g of silylated undecylenic acid, a fluid was obtained which had a viscosity of 220 mPa•s; however, the fluid gelled after 1 week at room temperature. During the preparation, the reaction was quite violent with much foaming into the neck of the flask. The mixture was cooled with water to about 25° C and the foaming was observed to slow down and to start to recede. The mixture was reheated to 85° C and the preparation was continued as described above.

Example 2

This example demonstrates the utility of the present invention for preparing a carboxyldecyl-substituted siloxane fluid which also has silicon-bonded dodecyl radicals and is useful to protect a steel substrate against rusting.

About 51.24 g of a polymethylhydrogensiloxane having the average formula $Me_3SiO(MeHSiO)_{40}SiMe_3$ and 0.05 g of a 0.1 N solution of $H_2PtCl_6 \cdot 6H_2O$ in isopropyl alcohol were placed in a 500 ml, 3-neck flask, fitted as described in Example 1, and heated to 100° C under a nitrogen sweep. About 125.1 g of dodecene and another 0.05 g of the platinum-containing solution were mixed and the mixture was slowly added to the heated polysiloxane through an addition funnel. Then 10.4 g of the above-described trimethylsilylated undecylenic acid (Example 1) was added slowly through an addition funnel. Another 22 g of the dodecene/catalyst mixture was thereafter added slowly through an addition funnel. Finally, 10 g of water were added to regenerate the carboxyl radical and the solution was stirred for one hour before excess water was stripped out with heat and vacuum (100° C/1.3 kPa (10 Torr)) leaving a liquid having a viscosity of 2.36 Pa•s and the average formula

$$Me_3SiO(\underset{\displaystyle C_{12}H_{25}}{\underset{|}{MeSiO}})_{38}(\underset{\displaystyle C_{10}H_{20}COOH}{\underset{|}{MeSiO}})_2SiMe_3.$$

After cooling, the liquid was applied to a portion of a clean steel panel which was then submerged in tap water overnight. The steel panel remained rust-free only on the coated portion of the panel, indicating that the fluid remained coated on, and protected, the steel surface while it was submerged. The unused liquid did not gel, even after 18 months of room temperature.

When the above-described preparation of the fluid was attempted with undecylenic acid instead of trimethylsilylated undecylenic acid, the reaction mixture gelled after the undecylenic acid had been added but before the second portion of dodecene could be added. The reason for the gelling was thought to be reaction between the carboxyl group on the undecylenic acid and silicon-bonded hydrogen atoms on the polymethylhydrogen siloxane.

Example 3

This example demonstrates the preparation of a carboxyldecyl-substituted disiloxane according to the method of the present invention.

To a 1000 ml, 3-neck flask fitted with a stirrer, thermometer, addition funnel, condenser, heating mantle and a nitrogen sweep were added 320 g of trimethylsilylated undecylenic acid, prepared as noted in, Example 1 except 45 g of hexamethyldisilazane were, used, along with 0.1 g $H_2PtCl_6 \cdot 6H_2O$ (0.1 N in

isopropyl alcohol). The mixture was heated to 95° C with medium agitation. An addition funnel was used to slowly add 80 g of sym-tetramethyldihydrogendisiloxane. Exotherm temperature was kept below 110° C. After addition of the disiloxane was complete, the mixture was allowed to react for one hour at 110° C. Then the mixture was cooled to 70° C and 60 g of water were added and mixed for two hours at low agitation to regenerate the carboxyl groups. Excess water, $Me_3SiOH$ and $(Me_3Si)_2O$ were removed with heat and vacuum (120° C at 1.3 kPa (10 Torr)). The product was poured off at about 50° C and it solidified at 36-40° C. The product was determined to have the formula

$$HOOC(CH_2)_8CH_2CH_2Me_2SiOSiMe_2CH_2CH_2(CH_2)_8COOH.$$

Example 4

This example demonstrates that the carboxyldecyl-substituted disiloxane of Example 3 can be used to produce a carboxyldecyl-terminated diorganopolysiloxane.

To a 5 liter, 3-neck flask fitted with a stirrer, thermometer, condenser and heating mantle was added 2809.5 g cyclopolydimethylsiloxane having the general formula $\{Me_2SiO\}_x$ wherein x had an average number of about 5 along with 190.5 g of the carboxyfunctional disiloxane product of Example 3 and about 3 g of trifluoromethane sulfonic acid as a siloxane bond-rearranging catalyst. The components were heated to 55° C for 6 hours with medium agitation and then cooled to 30° C at which time the sulfonic acid catalyst was neutralized. The reaction product was then pressure-filtered through diatomaceous earth to remove neutralization salts. The product was determined to have a viscosity of 340 mPa•s, an A.N. of 14 and the formula

$$HOOC(CH_2)_8CH_2CH_2SiMe_2O(SiMe_2O)_{100}SiMe_2CH_2CH_2(CH_2)_3COOH.$$

The reaction product was spread on a portion of a clean steel panel which was then submerged in tap water overnight. Only the coated portions did not rust. The reaction product did not gel during a period of 16 months.

Example 5

This example demonstrates the utility of the present invention for preparing a water-soluble carboxyldecyl-substituted siloxane fluid by incorporating therein silicon-bonded hydrocarbyl radicals substituted with polyoxyalkylene radicals.

A 1000 ml, 3-neck flask fitted with a stirrer, thermometer, condenser and heating mantle was charged with 148.44 g of a siloxane having the average formula

$$Me_3SiO(Me_2SiO)_{90}(MeHSiO)_{10}SiMe_3$$

and 0.1 g of a 0.1 N solution of $H_2PtCl_6 \cdot 6H_2O$ in isopropyl alcohol. The contents of the flask were blanketed with dry nitrogen and heated to 120° C while being stirred. A mixture of 270 g of an acetoxy-capped, allyloxy-initiated polyoxyalkylene containing about 25 ethyleneoxy units and about 25 propyleneoxy units per molecule and 0.1 g of the above-described platinum-containing solution was slowly added to the stirred siloxane and heated at 120° C for an additional 30 minutes after the addition was completed. Thereafter, a mixture of 25.70 g of trimethyl-silylated undecylenic acid, prepared as described in Example 1 except 48 g of hexamethyldisilazane were used, and 0.1 g of the above-described platinum-containing solution was slowly added to the reaction mixture and the resulting mixture was heated for an additional 1 hour at 120° C. The resulting fluid had a viscosity of 5.16 Pa•s and a nominal formula

$$Me_3SiO(\underset{\substack{|\\ C_{10}H_{20}COOH}}{MeSiO})_4(Me_2SiO)_{90}(\underset{\substack{|\\ (CH_2)_3O(CH_2CH_2O)_{25}(CH_2\underset{\substack{|\\ CH_3}}{C}HO)_{25}\overset{\substack{O\\ \|}}{C}CH_3}}{MeSiO})_6SiMe_3$$

Aqueous solutions consisting of 90, 50 or 10 parts of this siloxane and 10, 50 or 90 parts, respectively, of water were clear and stable over a period of 11 months.

Example 6

The siloxane preparation described in Example 1 was repeated except that the unsaturated silylated acid was trimethyl-silylated pentenoic acid which was prepared from 50 g of 4-pentenoic acid and 48 g of hexamethyldisilazane and was added to a mixture of the siloxane containing silicon-bonded hydrogen atoms and the platinum catalyst. The resulting carboxylbutyl-substituted siloxane had the nominal formula

$$Me_3SiO(Me_2SiO)_{67}(\underset{\substack{|\\ C_4H_8COOH}}{MeSiO})_3SiMe_3,$$

a viscosity of 400 mPa•s and an acid number of 25.6.

Example 7

The preparation described in Example 1 was repeated using 56 g of the trimethyl-silylated undecylenic acid described in Example 5, 386.5 g of the siloxane containing silicon-bonded hydrogen atoms, 0.2 part of the platinum-containing catalyst and 28 parts of water. The fluid product has a viscosity of 300 mPa•s and an A.N. of 31.6.

Example 8

The preparation described in Example 2 was repeated except that the initial amount of dodecene, the trimethylsilylated undecylenic acid and the $H_2PtCl_6 \cdot 6H_2O$ in IPA were mixed and then added to the polymethylhydrogen siloxane followed by the additional dodecene, 36 g instead of 22 g, and water. The fluid product had a viscosity of 2.6 Pa•s and an A.N. of 10.2 (theory = 12.2).

When this preparation was repeated using undecylenic acid instead of trimethyl-silylated undecylenic acid, the reaction mixture gelled when about 25% of the mixture had been added.

Example 9

This example demonstrates that carboxylhydrocarbyl-substituted siloxanes made according to the present invention and using undecylenic acid are sufficiently substantive on steel to prevent rust while carboxylhydrocarbyl-substituted siloxanes made using methacrylic acid or 4-pentenoic acid are not substantive, even at a comparatively high carboxyl content.

Ten steel panels were cleaned with an abrasive kitchen cleanser until they were water wettable. The panels were then dried with paper towels and each was spread with a thin coating of one of the carboxyl-substituted diorganosiloxanes described in the Table. The coating was spread down the middle of each plate with a lint-free tissue. The panels were immersed in tap water overnight at room temperature and the percent of the area originally coated with fluid on each panel which remained rust free was estimated and is recorded in the Table.

## Claims

**1.** A method for preparing a carboxylhydrocarbyl-substituted silicon compound, said method comprising

(A) reacting a carboxyl-substituted alpha olefin with a silylating agent to silylate substantially all carboxyl radicals therein, thereby providing a silylcarboxyl-substituted alpha olefin, the carboxyl-substituted alpha olefin having the formula $CH_2=CR''Q_mCOOH$ wherein R'' denotes -H or $-CH_3$, Q denotes a divalent hydrocarbon radical free of aliphatic unsaturation and m has a value of 0 or 1, and the silylating agent having the formula $R'_3SiZ$ wherein R' denotes a monovalent hydrocarbon radical free of aliphatic unsaturation and Z denotes a radical selected from -Cl, $-NHSiR'_3$, $-N(SiR'_3)-COCH_3$, $-N(CH_3)COCH_3$ and

$$-\overline{NCOCH_2CH_2CH_2};$$

(B) reacting the silylcarboxyl-substituted alpha olefin with a hydrosilylating agent, thereby providing a silylcarboxylhydrocarbyl-substituted silicon compound, the hydrosilylating agent being selected from silanes and siloxanes having the average unit formula $R_aH_bSiO_{(4-a-b)/2}$ wherein R denotes an R' radical or an R' radical substituted with a radical selected from alkoxy, polyoxyalkylene and epoxy, a has a value of from 1 to 3 and b has a value of from 0.001 to 1; and

(C) reacting the silylcarboxylhydrocarbyl-substituted silicon compound with a hydrolyzing agent to hydrolyse substantially all of the silylcarboxyl radicals therein and to provide the carboxylhydrocarbyl-substituted silicon compound.

**2.** A method according to claim 1, wherein the hydrolyzing agent is water.

**3.** A method according to claim 1, wherein the carboxyl-substituted alpha olefin has the formula $CH_2=CH-(C_nH_{2n})COOH$ wherein n has a value of from 1 to 20, the silylating agent is $(CH_3)_3SiNHSi(CH_3)_3$ and the hydrosilylating agent is a polysiloxane containing at least one silicon-bonded hydrogen atom and having the formula $R''Me_2SiO(MeR'SiO)_x(MeHSiO)_ySiMe_2R''$ wherein Me denotes the methyl radical, R' and R'' are as denoted in claim 1, x has a value of from 0 to 1000 and y has a value of from 0 to 1000.

## Patentansprüche

**1.** Verfahren zur Herstellung von carboxyhydrocarbyl-substituierten Siliconverbindungen, dadurch gekennzeichnet daß man

(A) ein durch eine Carboxylgruppe substituiertes alpha-Olefin mit einem Silylierungsmittel umsetzt, um im wsentlichen alle enthaltenen Carboxylgruppen zu substituieren und dadurch ein silylcarboxyl-substituiertes alpha-Olefin herzustellen, wobei dieses der Formel $CH_2=CR''Q_m\ COOH$ entspricht, in der R'' Wasserstoff oder Methyl bedeutet, Q einen zweiwertigen Kohlenwasserstoffrest ohne aliphatische Doppelbindung bezeichnet und m für 0 oder 1 steht, und das Silylierungsmittel die Formel $R'_3SiZ$ hat, in der R' einen einwertigen Kohlenwasserstoffrest ohne aliphatische Doppelbindung bedeutet und Z für einen Rest steht, der aus den Resten -Cl, $-NHSiR'_3$, $-N(SiR'_3)COCH_3$, $-N(CH_3)-COCH_3$ and

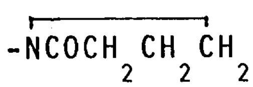

ausgewählt ist;

(B) das silylcarboxyl-substituierte alpha-Olefin mit einem Hydrosilylierungsmittel umsetzt und dadurch eine silylcarboxylhydrocarbyl-substituierte Silikonverbindung erhält, wobei das Hydrosilylierungsmittel ausgewählt wird aus Silanen und Siloxanen der durchschnittlichen Formel $R_aH_bSiO_{(4-a-b)/2}$, in der R den Rest R' oder einen durch Alkoxy, Polyalkoxyalkylen oder Epoxy substituierten Rest R' bedeutet, a einen Wert von 1 bis 3 und b einen Wert von 0,001 bis 1 hat; und

(C) die silylcarboxylhydrocarbyl-substituierte Silikonverbindung mit einem hydrolysierenden Mittel umsetzt, um im wesentlichen alle Silylcarboxyl-Reste zu hydrolysieren und so die Carboxylhydrocarbyl-substituierte Silikonverbindung zu erhalten.

**2.** Verfahren nach Anspruch 1, dadurch gekennzeichnet, daß das hydrolysierende Mittel Wasser ist.

**3.** Verfahren nach Anspruch 1, dadurch gekennzeichnet, daß das carboxyl-substituierte alpha-Olefin der Formel $CH_2=CH(C_nH_{2n})COOH$ entspricht, in der n einen Wert von 1 bis 20 hat, das Silylierungsmittel $(CH_3)_3SiNHSi(CH_3)_3$ ist und das Hydrosilylierungsmittel wenigstens ein an Silizium gebundenes Wasserstoffatom enthält und der Formel $R''Me_2SiO(MeR'SiO)_x\ (MeHSiO)_y\ SiMe\ R''$ entspricht, in der Me den Methylrest bedeutet, R' und R'' die in Anspruch 1 angegebene Bedeutung haben, x für einen Wert von 0 bis 1000 und y ebenfalls für einen Wert von 0 bis 1000 steht.

## Revendications

**1.** Procédé pour la préparation d'un composé du silicium substitué par des groupes carboxylhydrocarbyles, ledit procédé comprenant les étapes consistant à:

(A) faire réagir une alpha-oléfine carboxylée avec un agent de silylation pour silyler pratiquement tous les groupes carboxyles dans celle-ci, et obtenir ainsi une alpha-oléfine silylcarboxylée, l'alpha-oléfine carboxylée ayant la formule générale $CH_2 = CR''Q_mCOOH$, dans laquelle R'' représente -H ou $-CH_3$, Q représente un radical hydrocarboné divalent exempt d'insaturation aliphatique, et m vaut 0 ou 1, et l'agent de silylation ayant la formule $R'_3SiZ$, dans laquelle R' représente un radical hydrocarboné monovalent exempt d'insaturation aliphatique et Z représente un radical choisi parmi -Cl, $-NHSiR'_3$, $-N(SiR'_3)COCH_3$, $-N(CH_3)COCH_3$ et

$$-\overline{NCOCH_2CH_2CH_2};$$

(B) faire réagir l'alpha-oléfine silyl-carboxylée avec un agent d'hydrosilylation, pour obtenir un composé du silicium substitué par des groupes silylcarboxylhydrocarbyles, l'agent d'hydrosilylation étant choisi parmi les silanes et les siloxanes ayant la formule unitaire moyenne $R_aH_bSiO_{(4-a-b)/2}$, dans laquelle R représente un radical R' ou un radical R' substitué par un radical choisi parmi les radicaux alkoxy, polyoxyalkylène et époxy, a vaut de 1 à 3 et b vaut de 0,001 à 1; et

(C) faire réagir le composé de silicium substitué par des groupes silylcarboxylhydrocarbyles avec un agent hydrolysant pour hydrolyser pratiquement tous les radicaux silylcarboxyles dans celui-ci, et pour obtenir le composé du silicium substitué par des groupes carboxylhydrocarbyles.

**2.** Procédé selon la revendication 1, dans lequel l'agent hydrolysant est l'eau.

**3.** Procédé selon la revendication 1, dans lequel l'alpha-oléfine carboxylée a la formule $CH_2 = CH(C_nH_{2n})$-COOH, dans laquelle n vaut de 1 à 20, l'agent de silylation est $(CH_3)_3SiNHSi(CH_3)_3$ et l'agent d'hydrosilylation est un polysiloxane contenant au moins un atome d'hydrogène lié au silicium et ayant la formule $R''Me_2SiO(MeR'SiO)_x(MeHSiO)_ySiMe_2R''$ dans laquelle Me représente le radical méthyle, R' et R'' sont tels qu'indiqué dans la revendication 1 x vaut de 0 à 1 000 et y vaut de 0 à 1 000.